# EUROPÄISCHE PATENTANMELDUNG

(11) **EP 0 821 984 A2**
(43) Veröffentlichungstag der Anmeldung: **04.02.1998**
(21) Anmeldenummer: 97111263.6
(22) Anmeldetag: 04.07.1997
(51) Int. Cl.: A63C 17/26

(54) **Inline Skates mit Warneinrichtung**

(30) Priorität: 01.08.1996 CH 1900/96
(71) Anmelder: Lumpert, Jürg B., 8038 Zürich (CH)
(72) Erfinder: Lumpert, Jürg B., 8038 Zürich (CH)
(74) Vertreter: Müller, Hans-Jürgen, Dipl.-Ing.

(57) **Zusammenfassung**

Die erfindungsgemäßen Inline Skates mit Warneinrichtung besitzen einen in einem Rad (1) integrierten Spannungsgenerator (7), der aus der Bewegungsenergie beim bestimmungsgemäßen Gebrauch der Inline Skates elektrische Spannung zu erzeugen in der Lage ist, und einen ebenfalls im Rad (1) integrierten akustischen Signalgeber (11). Erfindungsgemäß ist zudem im Rad ein Fernsteuerempfänger (10) angeordnet, der mit einem Fernsteuersender (20) zusammenwirkt. Mittels des Fernsteuerempfängers (10) ist der akustische Signalgeber (11) ein- und ausschaltbar, wobei das Ein- und Ausschalten durch den Benutzer mit Hilfe des Fernsteuersenders (20) erfolgt, der erfindungsgemäß durch den Benutzer von Hand mittels eines Tasters (22) betätigt wird.

## Beschreibung

Die Erfindung bezieht sich auf Inline Skates gemäß dem Oberbegriff des Anspruchs 1.

Solche Inline Skates haben als Sportgerät und für den Freizeitgebrauch große Verbreitung gefunden.

Inline Skates der im Oberbegriff des Anspruchs 1 genannten Art sind aus der US-PS 5,484,164 bekannt. Die Benutzer solcher Inline Skates bewegen sich damit in der Öffentlichkeit, namentlich in Fußgängerbereichen, aber auch auf Straßen. Deshalb weisen sie eine Warneinrichtung auf, die dazu dient, andere Benutzer des gleichen Verkehrsraums aufmerksam zu machen. Die in der genannten US-PS beschriebenen Inline Skates besitzen als Warneinrichtung eine Beleuchtungseinrichtung, die aus Batterien gespeist wird.

Eine Warneinrichtung der vorgenannten Art erzielt die gewünschte Aufmerksamkeit nur in der Dämmerung und bei Dunkelheit, es sei denn, die Lichtleistung sei außerordentlich groß oder sonstwie besonders auffällig. Von den anderen Benutzern des Verkehrsraums werden sie aber trotzdem nicht immer wahrgenommen, weil es das Charakteristikum der optischen Wahrnehmung ist, daß sich der Blick des Benutzers aktiv auf den wahrzunehmenden Gegenstand richtet.

Der Erfindung liegt die Aufgabe zugrunde, Inline Skates mit einer Warneinrichtung zu schaffen, die einen großen Aufmerksamkeitsgrad erreichen, ohne daß sich der zu warnende Verkehrsteilnehmer aktiv um die Beobachtung des umgebenden Verkehrsraumes bemühen muß.

Die genannte Aufgabe wird erfindungsgemäß durch die Merkmale des Anspruchs 1 gelöst. Vorteilhafte Weiterbildungen ergeben sich aus den abhängigen Ansprüchen.

Nachfolgend wird ein Ausführungsbeispiel der Erfindung anhand der Zeichnung näher erläutert. Die erfindungsgemäßen Inline Skates besitzen als Warneinrichtung eine solche akustischer Art. Akustische Warneinrichtungen sind bekannt und haben sich in vielerlei Anwendungen durchgesetzt, weil die akustische Signalgebung den Vorteil hat, daß dadurch andere Personen auch dann aufmerksam werden, wenn sie sich aktiv gar nicht um Aufmerksamkeit bemühen. Beispiele solcher Warneinrichtungen sind Klingeln an Fahrrädern, Hupen bei Kraftfahrzeugen und auch Signalhörner an Lastkraftwagen, die eine Tonfolge abgeben, wenn bei dem Fahrzeug der Rückwärtsgang eingelegt ist.

Die erfindungsgemäßen Inline Skates mit Warneinrichtung besitzen einen in einem Rad integrierten Spannungsgenerator, der aus der Bewegungsenergie beim bestimmungsgemäßen Gebrauch der Inline Skates elektrische Spannung zu erzeugen in der Lage ist, und einen ebenfalls im Rad integrierten akustischen Signalgeber. Erfindungsgemäß ist zudem im Rad ein Fernsteuerempfänger angeordnet, der mit einem Fernsteuersender zusammenwirkt. Mittels des Fernsteuerempfängers ist der akustische Signalgeber ein- und ausschaltbar, wobei das Ein- und Ausschalten durch den Benutzer mit Hilfe des Fernsteuersenders erfolgt, der erfindungsgemäß durch den Benutzer von Hand betätigt wird.

Der akustische Signalgeber kann ein Lautsprecher nach dem Prinzip der bewegten Magnetspule sein, alternativ aber auch ein Piezoschwinger. Diese beiden Arten von akustischen Signalgebern benötigen elektrische Energie, die durch den Spannungsgenerator bereitgestellt wird. Um den Bedarf an elektrischer Energie klein zu halten, kann es vorteilhaft sein, als akustischen Signalgeber ein mechanisches Läutewerk vorzusehen, das durch die Rotation des Rades betätigt wird. In diesem Fall wird elektrische Energie nur noch dafür benötigt, einen Hubmechanismus zu betätigen, mit dessen Hilfe das mechanische Läutewerk ein- bzw. ausgeschaltet wird. Alternativ kann vorteilhaft ein mechanisch-elektrisches Läutewerk nach dem altbekannten Prinzip der elektrischen Klingel Anwendung finden.

Es zeigen:
- Fig. 1: ein Schema einer Warneinrichtung mit einem Rad eines Inline Skates,
- Fig. 2: den Aufbau eines Rades,
- Fig. 3: ein Schema eines Spannungsgenerators,
- Fig. 4: eine Schaltung mit dem Spannungsgenerator und einem Fernsteuerempfänger,
- Fig. 5: ein erstes Ausführungsbeispiel für einen akustischen Signalgeber,
- Fig. 6a und 6b: ein zweites Ausführungsbeispiel eines Signalgebers,
- Fig. 7: ein weiteres Ausführungsbeispiels für einen akustischen Signalgeber,
- Fig. 8: ein Schema eines Fernsteuersenders,
- Fig. 9: eine Betätigungsvorrichtung und
- Fig. 10 bis 12: Einzelheiten eines Spannungsgenerators.

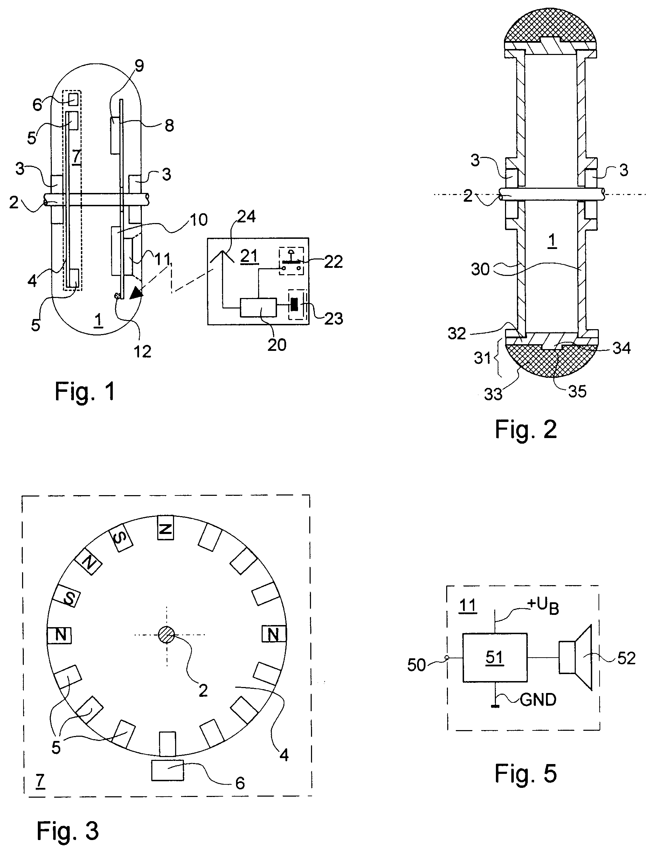

In der Fig. 1 bedeutet 1 ein Rad eines Inline Skates, das um eine Achse 2 drehbar ist, die in einem nicht dargestellten Laufwerk eines Inline Skates befestigt ist. Die leichtgängige Drehbarkeit des Rades 1 wird erreicht durch je ein beidseits angeordnetes Kugellager 3, das einerseits mit seinem Innenring auf der Achse 2 und andererseits mit seinem Außenring mit dem Rad 1 verbunden ist. Mit der Achse 2 fest verbunden ist ein Stator 4, an dem Magnete 5 befestigt sind. Der Stator 4 hat vorteilhaft eine kreisrunde Gestalt und die Magneten 5 sind entlang seines Außendurchmessers angeordnet. Im Rad 1 fest angeordnet ist wenigstens eine Spule 6, so daß sich die Spule 6 bei Drehung des Rades 1 um die Achse 2 auf einer Kreisbahn um den Stator 4 mit den Magneten 5 bewegt. Diese Spule 6 bildet somit zusammen mit den auf dem Stator 4 angeordneten Magneten 5 einen Spannungsgenerator 7, dessen Bestandteile in der Figur mit gestrichelter Linie zusammengefaßt sind. In der Fig. 1 sind der Übersichtlichkeit wegen bei einem solchen Spannungsgenerator 7 üblicherweise vorhandene zusätzliche Teile wie Polbleche nicht eingezeichnet.

Ebenfalls mit dem Rad 1 fest verbunden und sich mit ihm drehend ist im Rad 1 eine Trägerplatte 8 angeordnet, auf der eine Steuerschaltung 9, ein Fernsteuerempfänger 10 und ein akustischer Signalgeber 11 befestigt sind. Die Steuerschaltung 9 ist - in der Zeichnung der Übersichtlichkeit wegen nicht dargestellt - mit der Spule 6 verbunden. Eine der Aufgaben der Steuerschaltung 9 ist die Aufbereitung der in der Spule 6 erzeugten elektrischen Energie für den Betrieb des Fernsteuerempfängers 10 und des akustischen Signalgebers 11. Der Fernsteuerempfänger 10 ist mit einer Antenne 12 verbunden.

Der Fernsteuerempfänger 10 steht über die Antenne 12 mit einem Fernsteuersender 20 in Verbindung, der in einem Bediengerät 21 angeordnet ist. Dieses Bediengerät 21 enthält außerdem einen Taster 22, mit dem der Benutzer des Inline Skates den Fernsteuersender 20 betätigen kann. Der Fernsteuersender 20 wird durch eine Batterie 23 mit Spannung versorgt. Das Signal des Fernsteuersenders 20 wird mittels einer Antenne 24 abgestrahlt, so daß es von der Antenne 12 im Rad 1 aufgenommen werden kann.

Die vorstehend beschriebene Einrichtung funktioniert wie folgt. Wenn das Inline Skate auf einem Untergrund bewegt wird, wird durch das Drehen des Rades 1 um die Achse 2 in der Spule 6 eine Spannung erzeugt, mit der der Fernsteuerempfänger 10 und der akustische Signalgeber 11 betrieben werden. Betätigt der Benutzer der Inline Skates den Taster 22, so wird der Fernsteuersender 20 in Betrieb gesetzt. Über die Antenne 24 wird dessen Signal abgestrahlt. Für solche Zwecke ist in verschiedenen Ländern eine bestimmte Frequenz vorgesehen, in Europa beispielsweise die Frequenz von 433,9 MHz. In anderen Ländern und Zonen sind andere Frequenzen innerhalb des Bereichs 200 bis 960 MHz üblich, in den USA beispielsweise die Frequenzen 303,8 MHz, 315 MHz, 345 MHz, 390 MHz, 418 MHz und das Band von 902 bis 928 MHz, sowie in manchen Ländern oder Regionen auch Frequenzen im Langwellen-Bereich. Fernsteuersender 20, Fernsteuerempfänger 10 und die Antennen 12 und 24 sind jeweils für die Frequenz ausgelegt. Das von der Antenne 24 abgestrahlte Signal, in der Fig. 1 durch einen gestrichelt gezeichneten Blitzpfeil dargestellt, wird von der Antenne 12 im Rad 1 aufgenommen. Dadurch wird der akustische Signalgeber 11 im Rad 1 aktiviert. Er strahlt nun akustische Wellen ab, die die übrigen Benutzer des Verkehrsraums, in dem sich der Benutzer der Inline Skates bewegt, aufnehmen, so daß sie aufmerksam gemacht werden. Das Signal des akustischen Signalgebers 11 dauert so lange, wie der Benutzer den Taster 22 betätigt. Grundsätzlich ist dadurch der akustische Signalgeber 11 ein- und ausschaltbar.

Durch die Anordnung des Spannungsgenerators 7, des akustischen Signalgebers 11, des Fernsteuerempfängers 10 und der damit im Zusammenhang stehenden weiteren Bauteile besteht innerhalb des Rades 1 ein erheblicher Platzbedarf. Deshalb ist es zur Verwirklichung der Erfindung erforderlich, diesen Platzbedarf durch eine besondere Gestaltung des Rades 1 zu befriedigen.

In der Fig. 2 ist der Aufbau eines Rades aus mechanischen Einzelteilen gezeigt, durch den dieser Platzbedarf gedeckt werden kann. Das Rad 1 besteht aus zwei Radscheiben 30 und einem diese umgebenden und verbindenden Radreifen 31, der seinerseits aus einem Träger 32 und einem Lautkörper 33 zusammengesetzt ist. Dabei weist der Träger 32 Formstücke 34 auf, in die Vertiefungen 35 des Lautkörpers eingreifen. Die Formstücke 34 und die Vertiefungen 35 sind räumlich so gestaltet, daß sie das Verrutschen des Laufkörpers 33 auf dem Träger 32 verhindert, und zwar sowohl in Umfangsrichtung als auch in seitlicher Richtung. Die Formstücke 34 sind um Träger 32 unmittelbar angeformt. So kann der Träger 32 beispielsweise ein entsprechend gestaltetes Guß-, Press-, Spritz- oder Druckgußteil sein. Die Vertiefungen des Laufkörpers 33 ergeben sich zwangsweise, wenn die Herstellung des Radreifen 31 auf eine solche Weise erfolgt, daß der Träger 32 in einem entsprechenden Werkzeug umspritzt wird. Dabei wird eine innige Verbindung zwischen Träger 32 und Laufkörper 33 erreicht.

In einer passenden zentrischen Vertiefung jeder Radscheibe 30 ist ein schon im Zusammenhang mit der Fig. 1 erwähntes Kugellager 3 eingepaßt. Der innere Ring des Kugellagers 3 ist mit der Achse 2 verbunden. Die Radscheiben 30 sind mit dem Radreifen 31 fest verbunden, wobei in Analogie zur vorgenannten Gestaltung des Radreifens 31 die ineinandergreifenden Flächen von Radscheiben 30 und Radreifen 31 so gestaltet sind, daß sowohl das Verrutschen des Radreifens 31 in Umfangsrichtung als auch das Verdrehen der beiden Radscheiben 30 gegeneinander unmöglich ist. Das kann beispielsweise durch entsprechende Nuten, Kerben und dergleichen geschehen.

In der Fig. 3 ist der Spannungsgenerator 7 schematisch dargestellt. Er besteht aus der Spule 6 und einer Anzahl von Magneten 5. Die Magneten 5 sind entlang der Umfangslinie des Stators 4 angeordnet. Der Stator 4 ist mit der Achse 2 starr verbunden. Da die Achse 2 im nicht dargestellten Laufwerk starr befestigt ist, steht also auch der Stator 4 starr im Laufwerk, dreht sich also bei sich drehendem Rad 1 nicht mit. Hingegen ist die Spule 6 mit dem sich drehenden Rad 1 verbunden. Die Spule 6 ist der Umfangslinie des Stators 4 unmittelbar benachbart. Die Zahl der Magnete 5, die sich über den Umfang des Stators 4 gleichmäßig verteilt, ist geradzahlig und jeweils benachbarte Magnete 5 sind entgegengesetzt magnetisiert. Bei sich drehendem Rad 1 wird somit in der Spule 6 eine elektrische Spannung induziert.

Vorteilhaft ist die Zahl der Magnete 5 geradzahlig und jeweils benachbarte Magnete 5 sind entgegengesetzt magnetisiert. Die Spule 6 ist unmittelbar außerhalb der Umfangslinie des Stators 4 angeordnet. Der verbleibende Luftspalt soll möglichst klein sein. Um eine möglichst große Menge elektrischer Energie gewinnen zu können, kann es vorteilhaft sein, mehrere Spulen 6 vorzusehen. So kann die Zahl der Spulen 6 halb so groß sein wie die Zahl der Magnete 5. In einem solchen Fall sind die Spulen 6 wie die Magnete 5 gleichmäßig über den Umfang verteilt, so daß der Abstand von Spule 6 zu Spule 6 im Bogenmaß doppelt so groß ist wie der Abstand von Magnet 5 zu Magnet 5 im Bogenmaß. Im vorgenannten Fall werden die einzelnen Spulen vorteilhaft allesamt parallel geschaltet. Diese Lösung hat den Vorteil, daß die Ausbeute an elektrischer Energie größer ist als beim Vorhanden sein nur einer Spule 6.

Die Zahl der Spulen 6 kann aber auch gleich groß sein wie die Zahl der Magnete 5. Die Abstände im Bogenmaß sind dann allesamt gleich. In einem solchen Fall ist es vorteilhaft, jeweils Zweiergruppen von benachbarten Spulen 6 zu bilden und die beiden Spulen 6 antiparallel oder mit unterschiedlichem Wickelsinn in Reihe zu schalten. Alle diese Zweiergruppen sind dann parallel geschaltet.

Die Zahl der Magnete 5 beträgt beispielsweise 16. Bei 8 der Magnete 5 liegt somit der magnetische Nordpol N auf der Vorderseite des Stators 4 und der magnetische Südpol S auf der Rückseite. Vorder- und Rückseite beziehen sich dabei auf die Ansicht gemäß Fig. 3. Bei den übrigen 8 Magneten 5 ist es umgekehrt. Im Rahmen der Erfindung sind andere Magnetisierungsrichtungen und Spulenanordnungen möglich.

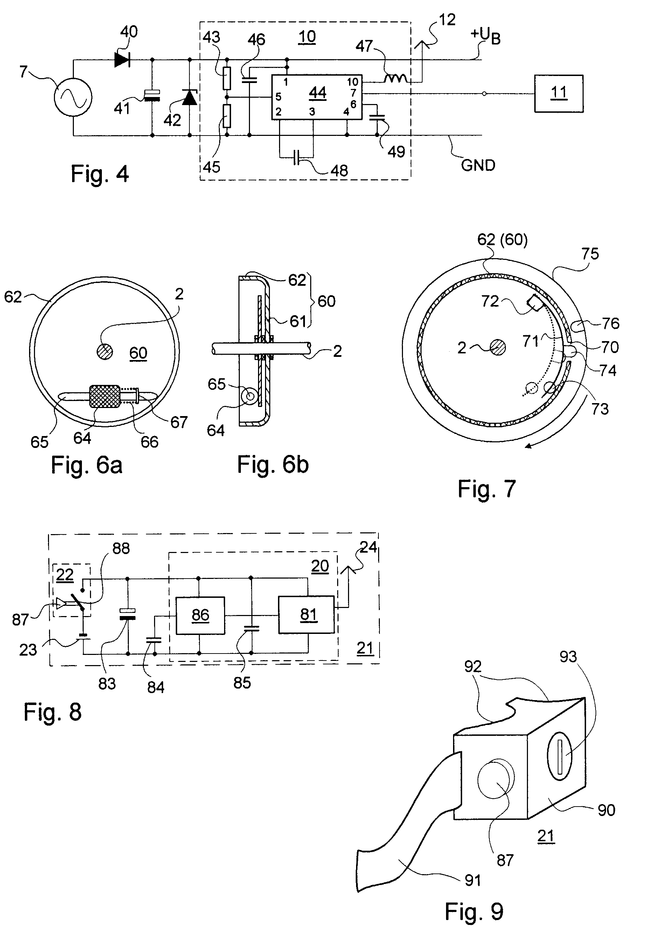

In der Fig. 4 ist eine Schaltung mit dem Spannungsgenerator 7 und dem Fernsteuerempfänger 10 dargestellt. An einen ersten Anschlußpunkt des Spannungsgenerators 7 ist eine Diode 40 angeschlossen, wobei dem Spannungsgenerator 7 die Anode der Diode 40 zugewandt ist. Am Kathodenanschluß der Diode 40, die den positiven Betriebsspannungsanschluß +U_{B} bildet, sind angeschlossen ein Ladekondensator 41, eine Zenerdiode 42, ein erster Widerstand 43 und ein integrierter Baustein 44. Der zweite Anschluß des Ladekondensators 41 und der Zenerdiode 42 sind mit einem zweiten Anschlußpunkt des Spannungsgenerators 7 verbunden. Dieser zweite Anschlußpunkt bildet die Bezugsmasse GND. An der Bezugsmasse GND liegt außerdem ein zweiter Widerstand 45 und ein erster Kondensator 46. Der nicht mit der Bezugsmasse GND verbundene zweite Anschlußpunkt des Widerstands 45 ist mit dem nicht am Betriebsspannungsanschluß +U_{B} liegenden zweiten Anschlußpunkt des Widerstands 43 verbunden. Die beiden Widerstände 43 und 45 bilden somit einen Spannungsteiler, der an einen Anschluß "5" des integrierten Bausteins 44 geführt ist. Der integrierte Baustein 44 ist beispielsweise ein in Hybridtechnik realisierter UHF-Empfänger des Typs RX 1000 der Firma RF Monolithics Inc., Dallas, Texas, USA. Die Anschlußbezeichnungen "1" bis "10" beziehen sich auf dieses Bauelement, jedoch sind beliebige andere UHF-Empfänger einsetzbar. Je nach Angaben des jeweiligen Herstellers wäre dann der Schaltungsaufbau entsprechend zu variieren.

Die Antenne 12 ist über ein Anpaßglied 47, beispielsweise einen induktiven oder einen ohmschen Widerstand, an einen Eingang "10" des integrierten Bausteins 44 angeschlossen. Zwischen weiteren Anschlüssen "2" und "3" liegt ein weiterer Kondensator 48 und ein weiterer Anschluß "6" des integrierten Bausteins 44 ist über einen dritten Kondensator 49 mit der Bezugsmasse GND verbunden. An diese Bezugsmasse GND ist der integrierte Baustein 44 mit seinem Anschluß "4" angeschlossen. Am positiven Betriebsspannungsanschluß +U_{B} liegt der integrierte Baustein 44 mit seinem Anschluß "1". An diesen Anschluß ist auch der zweite Anschluß des Kondensators 46 gelegt.

Der Anschluß "7" des integrierten Bausteins 44 ist der Datenausgang, mit dem das zu steuernde Elemente, hier also der akustische Signalgeber 11, verbunden ist.

Die Funktion der zuvor beschrieben Schaltung ist die folgende: Die vom Spannungsgenerator 7 erzeugte Wechselspannung wird mittels der Diode 40 im Einweg gleichgerichtet und die Spannung auf dem Ladekondensator 41 gespeichert. Die Zenerdiode 42 begrenzt die Spannung aufeinen Wert von beispielsweise 3,6 Volt. Ein nicht eingezeichneter Begrenzungswiderstand für den Ladestrom des Kondensators ist dann gar nicht erforderlich, wenn der Innenwiderstand des Spannungsgenerators 7, bestimmt durch die Impedanz der nicht dargestellten Spule 6, genügend groß ist. Das ist lediglich eine Bemessungsfrage.

Mit dem Spannungsteiler aus den Widerständen 43 und 45 kann die Ansprechempfindlichkeit beeinflußt werden. Der Kondensator 46 verhindert bzw. begrenzt das Rauschen der Speisung, d.h. ein Rippel der Speisespannung +U_{B}. Zu den Bemessungsregeln für die übrigen Bauteile sind die Angaben des Herstellers des integrierten Bausteins 44 zu beachten. Die Bemessung der Antenne 12 richtet sich gleichfalls nach den Angaben des Herstellers dieses Baustein. Als geeignet hat sich beispielsweise eine Kurzdraht-Antenne von 60 mm Länge erwiesen. Eine solche Antenne 12 ist im Rad 1 problemlos unterzubringen.

Der in Fig. 1 erwähnte Fernsteuerempfänger 10 ist also gemäß dem Ausführungsbeispiel nach Fig. 4 verwirklicht durch den integrierten Baustein 44 zusammen mit den Widerständen 43 und 45, den Kondensatoren 46, 48 und 49 und dem Anpaßglied 47. Diese funktionale Ausgestaltung des Fernsteuerempfängers 10 ist in der Fig. 4 durch eine gestrichelte Linie zusammengefaßt.

Zur Funktion ist noch festzuhalten, daß der Fernsteuerempfänger 10 immer dann in Betrieb ist, wenn die vom Spannungsgenerator 7 erzeugte Spannung einen bestimmten Grenzwert überschreitet. Die Schaltung ist so ausgelegt, daß dies bei einer bestimmten Mindestdrehgeschwindigkeit des Rades 1 im Inline Skate der Fall ist, also bei einer bestimmten Rollgeschwindigkeit der Inline Skates auf der Fahrbahn. Ist die Geschwindigkeit kleiner als dieser Grenzwert, dann ist der Fernsteuerempfänger 10 nicht in Betrieb. Er kann somit ein von der Antenne 12 aufgenommenes Signal nicht verarbeiten und folglich an seinem Ausgang "7" auch kein Steuersignal für den akustischen Signalgeber 11 abgeben. Somit ist beispielsweise im Stillstand eine akustische Signalgebung nicht möglich und damit schon eine gewisse Vorkehrung gegen den Mißbrauch der Alarmeinrichtung, beispielsweise im Gegensatz zu Kraftfahrzeug und Fahrrad, getroffen. Ist der Fernsteuerempfänger 10 in Betrieb, so erscheint dann, wenn die Antenne 12 ein Signal liefert, am Ausgang "7" ein Signal, das den akustischen Signalgeber 11 in Betrieb setzt.

Ein einfacher akustischer Signalgeber 11, der an die Schaltung nach der Fig. 4 anschließbar ist, ist in der Fig. 5 dargestellt. Er besitzt einen Eingang 50, der mit dem Ausgang "7" des integrierten Bausteins 44 verbunden ist. Dieser Eingang bildet den Eingang eines Tongenerators 51, der an die Speisespannung +U_{B} und an die Bezugsmasse GND angeschlossen ist. An den Ausgang des Tongenerators 51 ist ein Miniaturlautsprecher 52 angeschlossen, der wie die übrigen Teile innerhalb des Rades 1 eingebaut ist. Bei dieser Schaltung erzeugt der Tongenerator 51 das Tonsignal dann, wenn er durch den Fernsteuerempfänger 10 (Fig. 4) eingeschaltet ist.

Als akustischer Signalgeber 11 kann prinzipiell auch eine elektrische Klingel verwendet werden. Die Glocke ist dabei innerhalb des Rades 1 montiert. Der Elektromagnet einer solchen Klingel wird dabei über einen Schalttransistor angesteuert, dessen Basisanschluß mit dem Ausgang "7" des integrierten Bausteins 44 verbunden ist. Innerhalb des Stromkreises des Elektromagneten liegt außerdem der einer Klingel zugehörige Wagnersche Hammer.

Eine auf diesem Prinzip aufbauende Ausführungsvariante ist in den Fig. 6a und 6b schematisch dargestellt. Mit der Bezugszahl 60 ist eine Glockenschale bezeichnet. Diese ist vorteilhaft im Zentrum ihres Bodens 61 mit der Achse 2 fest verbunden, so daß sich die Glockenschale 60 nicht mit dem Rad dreht. Die Glockenschale 60 weist eine Mantelfläche 62 auf Innerhalb der Glockenschale 60 ist, ebenfalls starr mit der Achse 2 fest verbunden, eine Spule 64 angeordnet, in der ein Klöppel 65 beweglich aufgehängt ist. Der Klöppel 65 besteht wenigstens teilweise aus magnetisierbarem Material, so daß er durch Stromfluß in der Spule 64 bewegbar ist. Der Klöppel 65 schlägt bei sich änderndem Stromfluß durch die Spule 64 auf der Innenseite der Mantelfläche 62 auf und zwar abwechselnd auf der einen und der anderen Seite der Spule 64. Die starre Verbindung dieser Teile mit der Achse 2 ist vorteilhaft, weil die Massenverteilung nicht gleichmäßig ist, so daß diese Massen, wären sie einer Drehbewegung mit dem Rad 1 ausgesetzt, eine Unwucht verursachen würde.

Da diese Vorrichtung innerhalb des Rades 1 erheblichen Erschütterungen ausgesetzt sein kann, durch die der Klöppel 65 zwischen den beiden Aufschlagpunkten an der Mantelfläche 62 pendeln und somit das Ertönen der Glocke bewirken könnte, ist es vorteilhaft, den Klöppel 65 mittels einer Feder 66 nach einer Seite vorzuspannen, so daß er an einer Seite an der Mantelfläche 62 dauernd anliegt, wenn die Spule 64 nicht von Strom durchflossen ist. Die Feder 66 kann eine zylindrische Druckfeder sein, die zwischen dem Körper der Spule 64 und einem Halter 67 eingespannt ist. Der Halter 67 kann beispielsweise ein Sicherungsring sein, der in einer Nut des Klöppels 65 gehalten wird.

Die Spule 64 kann entweder mit Wechselspannung oder mit Gleichspannungsimpulsen betrieben werden. Beim Betrieb mit Wechselspannung schwingt der Klöppel 65 mit der Frequenz der Spannung zwischen den beiden Aufschlagpunkten an der Mantelfläche 62 hin und her, so lange der Wechselstromfluß anhält. Bei jedem Aufprall des Klöppels 65 auf einen Aufschlagpunkt wird ein Glockenton erzeugt. Beim Betrieb mit Gleichspannungsimpulsen wird der Klöppel 65 von der Anstiegsflanke des Impulses aus der Ruhelage heraus bewegt, so daß er am gegenüberliegenden Aufschlagpunkt anschlägt und dadurch ein Glockenton erzeugt wird. Am Ende eines Gleichspannungsimpulses fällt der Klöppel 65 in seine Ruhelage zurück und trifft dabei auf jenen Aufschlagpunkt, an dem er in der Ruhelage anliegt. Auch dabei wird ein Glockenton erzeugt, der aber infolge des anschliessenden Aufliegens des Klöppels 65 am Aufschlagpunkt gedämpft ist.

In der Fig. 6b sind Teile der Fig. 6a nochmals in einer Schnittdarstellung parallel zur Achse 2 gezeigt. Die aus dem Boden 61 und der Mantelfläche 62 bestehende Glockenschale 60 ist mit geeigneten Mitteln auf der Achse 2 befestigt. Gleichfalls mit der Achse 2 fest verbunden ist ein Träger 68, an dem der die Feder 66 tragende Halter 67 befestigt ist. Auf dem Träger 68 ist, der Übersichtlichkeit halber in der Fig. 6b nicht dargestellt, außerdem die Spule 64 montiert. Alle diese Elemente sind wegen der Verbindung mit der Achse 2 feststehend, d.h. sie drehen sich nicht mit dem Rad 1.

In der Fig. 7 ist eine alternative Ausführungsform für einen akustischen Signalgeber gezeigt. Diese Ausführungsform ist vorteilhaft, weil hier die eigentliche Signalerzeugung mechanisch erfolgt, elektrische Energie zur Signalerzeugung also nicht erforderlich ist. Dadurch ist der Gesamtbedarf an elektrischer Energie geringer. Mit der Bezugszahl 62 ist die Mantelfläche 62 der Glockenschale 60 gezeigt. Diese Mantelfläche weist eine Öffnung 70 auf Innerhalb der Glockenschale 60 ist eine Feder 71 angeordnet, die an einem Fixpunkt 72 einseitig fest eingespannt bzw. befestigt ist. Am freien Ende trägt die Feder 71 einen Klöppel 73. An einer bestimmten Stelle ist mit der Feder 71 ein Nocken 74 befestigt, und zwar so, daß der Nocken 74 genau durch die Öffnung 70 hindurchtreten kann. In der Darstellung der Fig. 7 befindet sich der Nocken 74 zwischen dem Fixpunkt 72 und dem Klöppel 73, jedoch ist diese Anordnung nicht zwingend, sondern kann auch anders aussehen. Die vorgenannten Teile sind analog zu den Fig. 6a und 6b fest mit der Achse 2 fest verbunden, drehen sich also bei sich drehendem Rad 1 nicht mit. An einem mit dem sich drehenden Rad 1 verbunden Ring 75, der beispielsweise mit dem Träger 32 identisch sein kann, ist wenigstens ein weiterer Nocken 76 befestigt.

Dreht sich das Rad 1, so dreht sich der Ring 75 um die Achse 2. Dies ist mit einem Pfeil gekennzeichnet. Damit bewegt sich auch der Nocken 76 auf einer Kreisbahn innerhalb des Rings 75. Die Nocken 74 und 76 sind so dimensioniert und angeordnet, daß sie einander berühren müssen, wenn sie sich unmittelbar gegenüberstehen. Der Nocken 74 ragt in die Bahn des Nockens 76 hinein. Kommt also durch die Drehung des Rings 75 der Nocken 76 in jenen Bereich, in dem der Nocken 74 durch die Öffnung 70 hindurchtritt, so schlägt der Nocken 76 am Nocken 74 an. Da der Nocken 76 am Ring 75 starr befestigt ist, der Nocken 74 jedoch federnd gelagert ist, weicht der Nocken 74 aus, indem die Feder 71 nach innen ausgelenkt wird. Dabei wird auch der Klöppel 73 nach innen ausgelenkt. Sobald sich der Nocken 76 am Nocken 74 vorbei bewegt hat, schwingt die Feder 71 zurück und dabei trifft der Klöppel 73 auf die Mantelfläche 62 der Glockenschale 60, wodurch ein Glockenton erzeugt wird. Bei jeder Umdrehung des Rades 1 wird also ein Glockenton erzeugt. Soll die akustische Warnung intensiver sein, so ist es möglich, auf dem Ring 75 mehr als einen Nocken 76 anzuordnen.

Bei der Anordnung nach der Fig. 7 wird der Glockenton allein vom sich drehenden Rad 1 erzeugt, ohne daß es elektrischer Energie bedarf Mit dieser Anordnung erfolgte die akustische Signalgebung aber dauernd, sobald sich das Rad 1 dreht. Das aber ist nicht erwünscht. Deshalb ist nach der Erfindung vorgesehen, daß die akustische Signalgebung auch unterbunden werden kann. Um dies zu erreichen, muß eine Einrichtung vorhanden sein, mit deren Hilfe die Feder 71 mit dem Nocken 74 und dem Klöppel 73 so um den Fixpunkt 72 verschwenkt werden kann, daß bei sich drehendern Rad 1 die beiden Nocken 74 und 76 nicht berühren können. Diese Position ist in der Fig. 7 durch punktierte Linien gezeigt und bildet die Normallage.

Erfindungsgemäß erfolgt die Verschwenkung zwischen diesen beiden Lagen ferngesteuert. Der Fernsteuerempfänger 10 (Fig. 4) wirkt dabei beispielsweise auf einen nicht dargestellten Hubmagnet, der die Verschwenkung zwischen den beiden Lagen bewirkt. Der Hubmagnet wird dabei vom Ausgang "7" (Fig. 4) des integrierten Bausteins 44 (Fig. 4) angesteuert. Bei nicht erregtem Hubmagnet nimmt die Einrichtung nach der Fig. 7 die durch punktierte Linien skizzierte Stellung ein, bei erregtem Hubmagnet die andere Stellung. Somit erfolgt die akustische Signalgebung nur dann, wenn der Hubmagnet erregt ist, d.h., wenn der Fernsteuerempfänger 10 (Fig. 4) ein Signal vom Fernsteuersender 20 (Fig. 1) empfängt.

Die Art der Einwirkung des Hubmagneten kann dabei auf verschiedene Weise erfolgen. So kann der Hubmagnet an einem beliebigen Punkt der Feder 71 angreifen. Andere konstruktive Lösungen sind denkbar. Wesentlich ist die fernsteuerbare Verschwenkung der Feder 71 zwischen den beiden genannten Lagen.

In der Fig. 8 ist ein Schema des schon in der Fig. 1 dargestellten Bediengeräts 21 gezeigt. Zentrales Element dessen ist ein als integrierter Baustein am Markt erhältlicher UHF-Sender 81. Geeignet dafür ist beispielsweise der zum integrierten Baustein 44 (Fig. 4) passende Typ "HX1000" der Firma RF Monolithics Inc., Dallas, Texas, USA. Dieser UHF-Sender 81 ist ausgelegt für eine der zuvor schon angegebenen Frequenzen. Zu seinem Betrieb ist die Batterie 23 erforderlich, die eine Spannung von beispielsweise 3 Volt liefert. Der Minus-Pol dieser Batterie 32 ist mit einem ersten Kondensator 83, einem zweiten Kondensator 84, einem dritten Kondensator 85, einem Taktgeber-Baustein 86 und dem UHF-Sender 81 verbunden. Am Plus-Pol der Batterie 23 ist ein mittels einer Taste 87 betätigbarer Schalter 88 angeschlossen, dessen zweiter Anschluß mit den jeweils anderen Anschlüssen des ersten Kondensators 83, des dritten Kondensators 85, einem zweiten Anschluß des Taktgeber-Bausteins 86 und einem zweiten Anschluß des UHF-Senders 81 verbunden ist. Die Taste 87 und der Schalter 88 bilden zusammen den schon in der Fig. 1 erwähnten Taster 22. Der zweite Anschluß des Kondensators 84 liegt an einem weiteren Eingang des Taktgeber-Bausteins 86. Außerdem ist ein Ausgang des Taktgeber-Bausteins 86 mit einem weiteren Eingang des UHF-Senders 81 verbunden. Am Ausgang des UHF-Senders 81 ist die schon in Fig. 1 gezeigte Antenne 24 angeschlossen.

Wird durch das Betätigen der Taste 87 der Schalter 88 geschlossen, so erhalten der Taktgeber-Baustein 86 und der UHF-Sender 81 Spannung und gehen in Betrieb. Der Taktgeber-Baustein 86 gibt an seinem mit dem UHF-Sender 81 verbundenen Ausgang eine Rechteckspannung ab, deren Frequenz durch die Größe des Kondensators 84 bestimmt ist. Damit wird der UHF-Sender 81 gesteuert. Der UHF-Sender 81 gibt an die Antenne 24 eine Folge von UHF-Paketen ab, die von der Antenne 24 abgestrahlt werden, so daß sie von der Antenne 12 (Fig. 1 und 4) aufgenommen und vom Fernsteuerempfänger 10 (Fig. 1 und 4) verarbeitet werden können.

Es ist vorteilhaft, die Schaltungen nach den Fig. 4 und 8 zu ergänzen durch eine Codierung bzw. Decodierung. Wenngleich die zulässige Leistung des Fernsteuersenders 20 und die Empfindlichkeit des Fernsteuerempfängers 10 begrenzt sind, so wäre es doch nicht auszuschließen, daß sich die akustischen Signalgeber 11 mehrere Benutzer gleichartiger Inline Skates gegenseitig beeinflussen, daß z. B. auch der Fernsteuerempfänger 10 eines zweiten Benutzers anspricht und der akustische Signalgeber 11 aktiv wird, wenn der erste Benutzer seinen Fernsteuersender 20 durch Drücken der Taste 22 aktiviert. Um dies zu vermeiden, können Fernsteuersender 20 und Fernsteuerempfängers 10 beispielsweise mit einem z.B. 24 bit langem Schlüsselwort codiert werden. Derartige Lösungen sind an sich bekannt.

Vorteilhaft kann es weiter sein, die Dauer der Signalgebung durch den akustischen Signalgeber 11 zu begrenzen, um den zuvor schon angesprochenen Mißbrauch der Alarmeinrichtung einzuschränken. So kann es vorteilhaft sein, den akustischen Signalgeber 11 nach einer bestimmten Zeit, z. B. nach längstens 2 Sekunden, für eine bestimmte Zeit abzuschalten.

In der Fig. 9 ist das Bediengerät 21 in einer möglichen Raumform gezeigt. Das Bediengerät 21 besteht aus einem Gehäuse 90, das mittels eines Befestigungsmittels 91, hier gezeigt als Band mit einem Klettverschluß, an einem Finger einer Hand befestigt werden kann. In diesem Band kann beispielsweise vorteilhaft die Antenne 24 integriert sein. Wenigstens eine Seite des Gehäuses 90 weist vorteilhaft eine Profilierung 92 auf, die an die durchschnittliche Rundung eines menschlichen Fingers angepaßt ist. Vorteilhaft ist es, wenn auch eine zweite Seite, nämlich jene, die der Taste 87 gegenüber liegt, eine solche Profilierung 92 aufweist. Dies ist zweckmäßig, wenn mit einem zweiten Finger ein Gegendruck zum Betätigen der Taste 87 erzeugt werden soll. Da das Bediengerät 21 batteriebetrieben ist, weist es auch ein Batteriefach auf, das mittels eines Deckels 93 verschlossen werden kann.

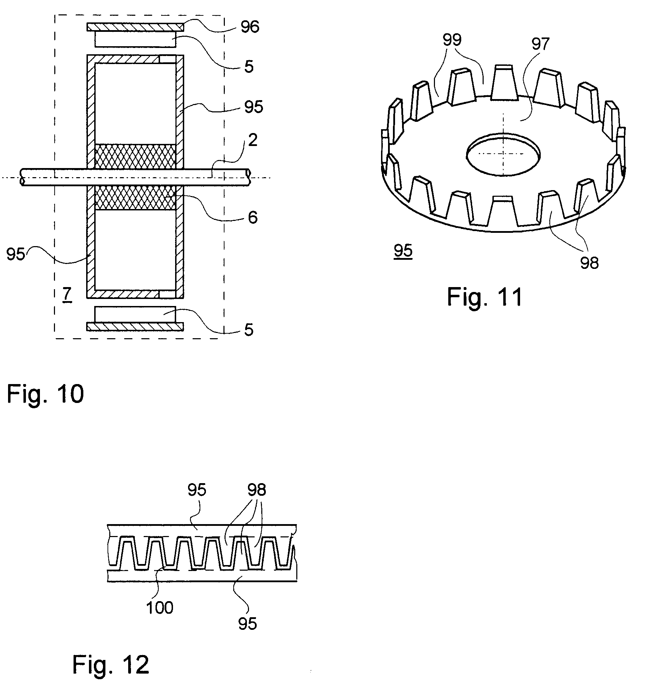

In der Fig. 10 ist eine im Hinblick auf große Ausbeute elektrischer Energie ganz besonders vorteilhafte Ausführungsform des Spannungsgenerators 7 in einer Schnittzeichnung gezeigt. Mit der Achse 2 starr verbunden sind zwei Polsterne 95, wobei der zweite Polstern 95 gegenüber dem ersten Polstern 95 um 180° gewendet ist. Beide Polsterne 95 bilden zusammen eine Art Käfig. Zwischen den beiden Polsternen 95, also innerhalb dieses Käfigs, ist um die Achse 2 die Spule 6 gewickelt, an deren nicht dargestellten beiden Drahtenden die vom Spannungsgenerator 7 erzeugte elektrische Energie abgreifbar ist. Um den zylindrischen Mantel dieses Käfigs herum liegt ein Ring 96, der mit dem Rad 1 fest verbunden ist, sich also dem Rad 1 um die feststehende Achse 2 dreht. Auf der Innenseite dieses Rings 96 sind die Magnete 5 angeordnet. Auf die Innenseite des Rings 96 sind beispielsweise 12 oder 16 Magnete 5 gleichmäßig verteilt, wobei wie beim zuvor beschriebenen Ausführungsbeispiel die Magnetisierungsrichtung der Magnete 5 wechselt. Die Hälfte aller Magnete 5 ist so magnetisiert, daß der magnetische Nordpol der Achse 2 zugewandt ist, während bei der anderen Hälfte der Magnete 5 der magnetische Südpol der Achse 2 zugewandt ist. Jeweils benachbarte Magnete 5 haben entgegengesetzte Magnetisierungsrichtung.

Jeder Polstern 95 besitzt, wie in der Fig. 11 dargestellt, eine Grundfläche 97 und eine Anzahl von rechtwinklig dazu angeordneten Polen 98. Die Zahl der Pole 98 eines Polsterns 95 kann beispielsweise 16, 12, 8 oder 6 betragen. Die Pole 98 haben beispielsweise trapezförmige Gestalt, so daß der Polstern 95 insgesamt eine Gestalt wie ein Kronenrad aufweist, was aus der Fig. 11 deutlich hervorgeht. Zwischen benachbarten Polen 98 besteht jeweils eine Lücke 99.

Es wurde schon erwähnt, daß der eine Polstern 95 gegenüber dem anderen Polstern 95 um 180° gewendet ist, so daß sich die beiden Polsterne 95 so gegenüberliegen, daß ihre Pole 98 einander zugewandt sind. Vorteilhaft sind die Polsterne 95 dabei so gegeneinander verdreht, daß jeder Pol 98 in eine Lücke 99 des gegenüberliegenden Polsterns 95 eingreift. Dies ist aus der Fig. 12 leicht erkennbar, in der eine Abwicklung der Mantelfläche des durch die beiden Polsterne 95 gebildeten Käfigs dargestellt ist. Zwischen den Polen 98 der beiden Polsterne 95 entsteht durch diese Anordnung der beiden Polsterne 95 ein Luftspalt 100, der eine Mäanderform aufweist.

## Patentansprüche

1. Inline Skates mit Warneinrichtung, wobei in einem Laufwerk um je eine Achse drehbare Räder angeordnet sind,
dadurch gekennzeichnet,
a. daß in einem Rad (1) ein Spannungsgenerator (7) integriert ist, der aus der Bewegungsenergie beim bestimmungsgemäßen Gebrauch der Inline Skates elektrische Spannung zu erzeugen in der Lage ist,
b. daß in dem Rad (1) ein akustischer Signalgeber (11) angeordnet ist,
c. daß zudem im Rad (1) ein Fernsteuerempfänger (10) angeordnet, der mit einem Fernsteuersender (20) zusammenwirkt,
d. daß dem Fernsteuersender (20) ein von Hand zu betätigender Taster (22) zugeordnet ist und
e. daß durch das Betätigen des Tasters (22) der akustische Signalgeber (11) aktivierbar ist.

2. Inline Skates nach Anspruch 1, dadurch gekennzeichnet, daß der Spannungsgenerator (7) besteht aus Magneten (5), die auf einem Stator (4) entlang einer kreisförmigen Linie angeordnet sind, wobei der Stator (4) mit der Achse (2) starr verbunden ist, daß die Anzahl der Magneten (5) geradzahlig ist und jeweils benachbarte Magnete (5) entgegengesetzt magnetisiert sind, und aus mindestens einer Spule (6), die im unmittelbaren Wirkungsbereich der auf dem Stator (4) angeordneten Magnete (5) angeordnet und mit dem sich um die Achse (2) drehenden Rad (1) fest verbunden ist.

3. Inline Skates nach Anspruch 1, dadurch gekennzeichnet, daß der akustische Signalgeber (11) durch ein Signal des Fernsteuersenders (20) mittels eines Fernsteuerempfängers (10) ein- und ausschaltbar ist.

4. Inline Skates nach Anspruch 3, dadurch gekennzeichnet, daß der akustische Signalgeber (11) ein Miniaturlautsprecher (52) ist, der ein von einem Tongenerator (51) erzeugtes Tonsignal abstrahlt, wobei der Tongenerator (51) das Tonsignal dann erzeugt, wenn er durch den Fernsteuerempfängers (10) eingeschaltet ist.

5. Inline Skates nach Anspruch 3, dadurch gekennzeichnet, daß der akustische Signalgeber (11) eine elektrisch betätigbare Klingel mit einer Glockenschale (60) ist.

6. Inline Skates nach Anspruch 5, dadurch gekennzeichnet, daß innerhalb der Glockenschale (60) ein mittels einer Spule (64) bewegbarer Klöppel (65) angeordnet ist, der durch den Stromfluß in der Spule (64) angetrieben wird und dabei durch wechselweisen Aufprall auf Punkte der Innenseite einer Mantelfläche (62) der Glockenschale (60) Glockentöne erzeugt.

7. Inline Skates nach Anspruch 6, dadurch gekennzeichnet, daß die Glockenschale (60) mit der Achse (2) formschlüssig verbunden ist.

8. Inline Skates nach Anspruch 1, dadurch gekennzeichnet, daß innerhalb der mit der Achse (2) formschlüssig verbundenen Glockenschale (60) eine um einen Fixpunkt (72) verschwenkbare Feder (71) angeordnet ist, die an ihrem freien Ende einen Klöppel (73) trägt, daß zwischen dem Fixpunkt (72) und dem freien Ende der Feder (71) ein erster Nocken (74) so angeordnet ist, daß er durch eine Öffnung (70) in der Mantelfläche (62) der Glockenschale (60) hindurchtritt, daß an einem mit dem sich drehenden Rad (1) verbundenen Ring (75) wenigstens ein weiterer Nocken (76) befestigt ist, der bei sich drehendem Rad (1) auf den ersten Nocken (74) auftrifft, dabei die Feder (71) nach innen auslenkt und daß beim Zurückfedern der Feder (71) der Klöppel (73) auf der Innenseite der Glockenschale (60) kurzzeitig aufschlägt.

9. Inline Skates nach Anspruch 3 bis 8, dadurch gekennzeichnet, daß Mittel vorhanden sind, durch die die Einschaltdauer für den akustischen Signalgeber (11) begrenzbar ist.

10. Inline Skates nach Anspruch 1 bis 9, dadurch gekennzeichnet, daß der Fernsteuersender (20) in einem Bediengerät (21) angeordnet ist, das mittels Befestigungsmitteln (91) an einem Finger einer Hand befestigbar ist.

11. Inline Skates nach einem der Ansprüche 1 bis 10, daß der Spannungsgenerator (7) besteht aus
- einer um die Achse (2) gewickelten Spule (5),
- zwei mit der Achse (2) starr verbundenen Polsternen (95), deren jeder eine Anzahl von Polen (98) aufweist, zwischen denen Lücken (99) bestehen, wobei die Polsterne (95) so angeordnet sind, daß jeder Pol (98) eines Polsterns (95) in eine Lücke (99) des gegenüberliegenden Polsterns (95) so eingreift, daß zwischen den Polen (98) der beiden Polsterne (95) ein Luftspalt (100) gebildet wird, und
- einem die Pole (98) der beiden Polsterne (95) umgreifenden Ring (96), auf dessen Innenseite Magnete (5) angeordnet sind.
